# DEMANDE DE BREVET EUROPEEN

(11) **EP 1 563 722 A1**
(43) Date de publication de la demande: **17.08.2005**
(21) Numéro de dépôt: 05300123.6
(22) Date de dépôt: 16.02.2005
(51) Int. Cl.: A01B 67/00

(54) **Dispositif et procede de regulation pour une machine de traitement d'un sol**

(30) Priorité: 17.02.2004 FR 0450286
(71) Demandeur: Panien, Philippe, 62860 INCHY-EN ARTOIS (FR)
(72) Inventeur: PANIEN, Philippe, 62860, INCHY-EN-ARTOIS (FR)
(74) Mandataire: Michelet, Alain

(57) **Abrégé**

L'invention concerne un dispositif de régulation simultanée de la vitesse d'avancement d'une machine de traitement d'un sol et de la vitesse de travail d'un outil de cette machine, et un procédé de régulation correspondant.

Le dispositif comprend :
- des moyens pour stocker
   = des valeurs indicatives de différents sols à traiter, et
   = des valeurs indicatives d'une vitesse de travail préétablie de l'outil et d'une vitesse d'avancement préétablie de la machine,
- des moyens pour appliquer un signal de commande représentatif d'une vitesse de travail et d'une vitesse d'avancement respectivement, selon la sélection par un opérateur de la machine, d'une valeur indicative du sol à traiter, et
- des moyens pour comparer la vitesse de travail effective avec la vitesse de travail résultant de la sélection de la valeur indicative du sol à traiter pour déterminer lorsque la différence entre ces deux vitesses dépasse un seuil principal, une autre vitesse travail et une autre vitesse d'avancement.

## Description

L'invention concerne un dispositif de régulation de vitesses d'une machine de traitement d'un sol, ainsi qu'un procédé de régulation de vitesses destiné à être mis en oeuvre par ce dispositif.

L'invention concerne plus particulièrement un dispositif de régulation simultanée de la vitesse d'avancement d'une machine de traitement d'un sol et de la vitesse de travail d'un outil de cette machine, ainsi qu'un procédé de régulation simultanée de la vitesse d'avancement d'une machine de traitement d'un sol et de la vitesse de travail d'un outil de cette machine.

Les machines de traitement d'un sol, telles des stabilisatrices de sol ou des fraises de sol, travaillent avec deux moteurs manuellement commandés dont l'un constitue un moyen d'entraînement pour donner une vitesse d'avancement à une telle machine et dont l'autre est un moyen d'entraînement donnant une vitesse de travail à un outil de cette machine. La qualité de traitement d'un sol donné obtenue avec une telle machine dépend de l'expérience que l'opérateur a acquis aussi bien avec la machine avec laquelle le travail est effectué qu'avec ce type de travail.

En effet, les machines de traitement d'un sol auxquelles la présente invention s'applique, ont une ou plusieurs roues montées sur un même axe et munies de dents ou un rotor muni de dents, comme outil entraîné avec une vitesse de travail. Lorsque cette vitesse de travail est trop grande par rapport à la dureté du sol ou lorsque la machine rencontre des obstacles tels que de grosses pierres ou des parties de roches ou encore des objets métalliques enfouis dans le sol, le sol agit, en réaction, sur l'outil pour le ralentir. Si l'opérateur n'aperçoit pas cette réaction et ne réduit pas aussitôt la vitesse de travail, il court le risque qu'une ou plusieurs dents de l'outil cassent. En contrepartie, lorsque le sol est plus meuble que l'opérateur ne l'a prévu ou qu'il n'était dans les parties de sol que la machine vient de traiter auparavant, la machine n'est pas efficacement exploitée, si l'opérateur ne s'en aperçoit pas et n'augmente donc pas la vitesse de travail de l'outil.
L'opérateur d'une machine de traitement d'un sol doit donc se fier à son expérience et à son attention permanente pour conduire cette machine à la fois efficacement et le plus rapidement possible. Il doit surtout être en mesure, à tout moment, lorsqu'un problème survient, d'adapter la vitesse de travail très rapidement aux nouvelles conditions de travail. Le cas échéant, il doit adapter aussi la vitesse d'avancement de la machine.

Par ailleurs, le traitement d'un sol implique, dans le cadre de ce qui est concerné par la présente invention, toujours un broyage et souvent aussi un malaxage d'une couche de sol enlevée par l'outil de la machine. Le but du broyage est de réduire le sol en des morceaux ayant une granulométrie prédéterminée qui dépend de la nature du sol et du traitement prévu, notamment des additifs à ajouter lors du malaxage. Des irrégularités d'entraînement de l'outil de l'avancement de la machine, suite à des variations de la nature du sol et de l'absence de correction par l'opérateur de la machine, conduisent à un résultat irrégulier du sol enlevé et broyé et par là à une mauvaise préparation du sol.

Cependant, le but de l'utilisation de machines de traitement d'un sol, telles des stabilisatrices, des fraises ou des recycleuses, est d'améliorer la qualité du sol, et, de manière générale, d'effectuer des travaux de réhabilitation de la couche supérieure d'un sol.

Les différents résultats de travail à obtenir varient en raison de la nature du sol et de l'effet produit par l'outil de la machine de traitement d'un sol. L'effet de l'outil résulte à la fois de la vitesse de travail de cet outil et de la vitesse d'avancement de la machine. Ainsi, pour un même sol, l'augmentation de la vitesse de travail de l'outil, à vitesse d'avancement constante de la machine, donne des morceaux de sol ayant une granulométrie plus fine. Mais l'augmentation de la vitesse d'avancement de la machine, à vitesse de travail constante de l'outil, donne des morceaux de sol ayant une granulométrie plus grosse. D'un autre côté, un sol meuble favorise une vitesse d'avancement plus grande qu'un sol dur.

L'opérateur doit donc être en mesure de choisir une vitesse de travail et une vitesse d'avancement qui permettent d'obtenir le résultat escompté.

Le but de l'invention est de proposer des moyens permettant de réguler la vitesse d'avancement d'une machine de traitement d'un sol et la vitesse de travail de l'outil de cette machine de manière à ce que le résultat obtenu soit le plus régulier possible et corresponde à une qualité préalablement déterminée.

Le but de l'invention est atteint avec un dispositif de régulation simultanée de la vitesse d'avancement d'une machine de traitement d'un sol et de la vitesse de travail d'un outil de cette machine qui comprend les unités et moyens suivants :
- une unité centrale comportant
   = un premier moyen pour stocker une série de premières valeurs indicatives de différents sols à traiter.
   = un second moyen pour stocker une série de secondes valeurs indicatives d'une vitesse de travail préétablie de l'outil et d'une vitesse d'avancement préétablie de la machine et
   = des troisièmes moyens pour corréler chacune des premières valeurs à l'une des secondes valeurs;
- un module de régulation de la vitesse de travail de l'outil et un module de régulation de la vitesse d'avancement de la machine, ces modules comportant des moyens de régulation permettant de maintenir la vitesse de travail et la vitesse d'avancement à la valeur choisie respectivement, le temps que la vitesse effective correspondante ne dépasse pas un seuil d'autorégulation ;
- des moyens pour appliquer à chacun des deux modules de régulation un signal de commande représentatif d'une vitesse de travail et d'une vitesse d'avancement respectivement, ces signaux de commande résultant de la sélection, par un opérateur de la machine, d'une valeur dans la série des premières valeurs, les deux modules de régulation réagissant aux signaux reçus de manière à faire entraîner la machine et l'outil avec une vitesse d'avancement et une vitesse de travail correspondant à la sélection faite par l'opérateur et à maintenir constantes les deux vitesses;
- des moyens pour comparer la vitesse de travail effective avec la vitesse de travail résultant de la sélection, par l'opérateur de la machine, de la première valeur et pour engendrer, lorsque la différence entre ces deux vitesses dépasse un seuil principal prédéterminé, qui est supérieur au seuil d'autorégulation des modules de régulation des deux vitesses, un signal de correction destiné à être envoyé aux moyens de corrélation afin que ces moyens déterminent une autre vitesse de travail de l'outil et une autre vitesse d'avancement de la machine et des signaux correspondants soient appliqués aux deux modules de régulation.

Grâce à la conception du dispositif de l'invention, la conduite d'une machine de traitement d'un sol équipée avec un tel dispositif est simplifiée, en ce qui concerne le choix et la variation de la vitesse d'avancement de cette machine et de la vitesse de travail de son outil, par la seule sélection, par l'opérateur de la machine, d'une valeur dans une série de premières valeurs données, à partir de laquelle le dispositif de l'invention assure une régulation optimale de la vitesse de travail de l'outil et de la vitesse d'avancement de la machine.

Comme cela est indiqué dans l'énumération des unités et moyens que le dispositif de l'invention comprend, la série de premières valeurs est indicative de différents sols à traiter. Plus précisément, cette série de premières valeurs purement numériques, c'est à dire sans unité de mesure, est attribuée délibérément à différents types de sol à traiter et différentes granulométries à obtenir par l'action d'une machine de traitement d'un sol.

En conséquence, avant d'utiliser une machine de traitement d'un sol équipée d'un dispositif de régulation selon l'invention pour le recyclage ou la stabilisation d'un sol, il convient de faire une analyse de ce sol pour déterminer la granulométrie à obtenir par la machine, et de déterminer ensuite celle des valeurs de la série des premières valeurs qui permettrait le mieux d'obtenir le résultat souhaité au vu de la nature du sol à traiter. Cette première valeur, que l'on peut appeler par exemple l'indice de malaxage, sera communiquée à l'opérateur de la machine de traitement d'un sol afin qu'il l'introduise dans le dispositif de l'invention comme cela sera expliqué plus loin.

Lorsque l'opérateur de la machine de traitement d'un sol équipé du dispositif de l'invention a introduit une valeur de la série des premières valeurs, les modules de régulation de la vitesse de travail de l'outil et de la vitesse d'avancement de la machine agissent chacun indépendamment de l'autre pour maintenir la vitesse de travail et la vitesse d'avancement à la valeur choisie respectivement, selon le principe de tout système d'autorégulation. En même temps, des moyens prévus à cet effet comparent la vitesse de travail effective avec la vitesse de travail résultant de la sélection faite par l'opérateur de la machine. Lorsque l'écart entre ces deux vitesses dépasse un seuil principal prédéterminé, qui est supérieur au seuil d'autorégulation, que la vitesse de travail effective soit supérieure ou inférieure à la vitesse de travail sélectionnée, le dispositif de l'invention modifie la vitesse d'avancement de la machine afin de maintenir le rapport entre la vitesse de travail de l'outil et la vitesse d'avancement de la machine constante. La nouvelle vitesse de travail de l'outil et la nouvelle vitesse d'avancement de la machine correspondent aux secondes valeurs corrélées à la valeur sélectionnée dans la série des premières valeurs.

Selon un mode de réalisation avantageux du dispositif de l'invention, il est prévu un premier capteur engendrant un premier signal représentatif des efforts de réaction du sol tendant à modifier la vitesse de travail de l'outil au-delà d'un seuil auxiliaire prédéterminé, qui est inférieur au seuil principal. Ce signal est envoyé à un moyen d'entraînement de l'outil afin de rétablir la vitesse de travail résultant de la sélection d'une valeur dans la série des premières valeurs, faite par l'opérateur de la machine de traitement d'un sol. Cette disposition permet, par exemple, d'essayer de maintenir la vitesse de travail constante, par une modification adéquate de la force d'entraînement de l'outil, dépassant la plage limitée d'une autorégulation.

Lorsque l'écart entre la vitesse de travail effective et la vitesse de travail résultant de la sélection d'une valeur dans la série des premières valeurs dépasse le seuil principal prédéterminé, le dispositif de l'invention détermine, selon une autre caractéristique de l'invention, la valeur supérieure ou inférieure la plus proche de la valeur préalablement sélectionnée dans la série des premières valeurs. A partir de cette nouvelle valeur, le dispositif de l'invention détermine une nouvelle vitesse de travail de l'outil et une nouvelle vitesse d'avancement de la machine afin d'obtenir à nouveau la meilleure combinaison de ces deux vitesses et, ainsi, un résultat le plus proche possible de celui initialement déterminé pour le travail à effectuer avec la machine de traitement d'un sol.

Selon d'autres caractéristiques supplémentaires avantageuses de l'invention, le dispositif de l'invention comprend un deuxième capteur engendrant un deuxième signal représentatif des efforts de réaction du sol tendant à modifier la vitesse de travail de l'outil au-delà du seuil principal. Le signal est alors envoyé au moyen de corrélation afin de choisir une vitesse d'avancement parmi les secondes valeurs selon le rapport prédéterminé entre la vitesse de travail de l'outil et la vitesse d'avancement de la machine. Ces nouvelles vitesses de travail et d'avancement sont introduites dans les modules de régulation comme nouvelles vitesses à maintenir constantes.

Le dispositif de l'invention peut également comprendre un troisième capteur engendrant un signal représentatif de la vitesse effective de travail de l'outil et un quatrième capteur engendrant un second signal représentatif de la vitesse effective d'avancement de la machine, le troisième et le quatrième capteurs étant reliés au module de régulation de la vitesse de travail et au module de régulation de la vitesse d'avancement respectivement pour la régulation de la vitesse correspondante.

Avantageusement, mais non nécessairement, le premier, le deuxième et le troisième capteurs servant à la régulation de la vitesse de travail de l'outil, sont réunis sur un seul capteur. Autrement dit, un capteur unique peut assurer à la fois la fonction du premier, du deuxième et du troisième capteurs servant à la régulation de la vitesse de travail de l'outil. La série de premières valeurs indicatives de différents sols à traiter tout aussi bien que la série de secondes valeurs indicatives d'une vitesse de travail préétablie de l'outil et d'une vitesse d'avancement préétablie de la machine sont normalement enregistrées dans le dispositif selon l'invention lors de la fabrication de la machine. La raison principale en est que les secondes valeurs correspondent à des donnés techniques telles que les dimensions de l'outil et les puissances d'entraînement de l'outil et de la machine respectivement. Cependant, par exemple à la suite d'une modification apportée à la machine ou à son outil, il peut être nécessaire de modifier les secondes valeurs et de modifier éventuellement aussi la corrélation entre les premières valeurs et les secondes valeurs. A cet effet, le dispositif de l'invention peut avantageusement être pourvu d'un moyen permettant d'enregistrer des premières et des secondes valeurs.

Selon encore une autre caractéristique possible d'un mode de réalisation du dispositif de l'invention, la vitesse d'avancement de la machine et la vitesse de travail de l'outil sont liées l'une à l'autre par un ou plusieurs coefficients de proportionnalité. Ces coefficients de proportionnalité ne sont pas nécessairement des nombres entiers. Dans ce cas, la série des secondes valeurs est constituée par une série de vitesses de travail de l'outil et une série de coefficients de proportionnalité entre la vitesse de travail de l'outil et la vitesse d'avancement de la machine. La série des vitesses de travail peut comprendre par exemple les vitesses maximales respectives attribuées à chacune des premières valeurs. Le dispositif de l'invention ajustera alors immédiatement et en permanence la vitesse d'avancement de la machine en fonction du couple du moyen d'entraînement de l'outil et en relation avec la nature du sol, et cela à partir de la vitesse de travail maximale ou la vitesse de travail la plus grande possible pour un sol donné.

Le but de l'invention est également atteint avec un procédé de régulation simultanée de la vitesse d'avancement d'une machine de traitement d'un sol et de la vitesse de travail d'un outil de cette machine. Conformément à l'invention, ce procédé comprend les étapes suivantes :
- Sélectionner, dans une unité centrale comportant
   ○ un premier moyen pour stocker une série de premières valeurs indicatives de différents sols à traiter,
   ○ un second moyen pour stocker une série de secondes valeurs indicatives d'une vitesse de travail préétablie de l'outil et d'une vitesse d'avancement préétablie de la machine et
   ○ des troisièmes moyens pour corréler chacune des premières valeurs à l'une des secondes valeurs,
   une valeur dans la série des premières valeurs sur la base de laquelle les troisièmes moyens déterminent une vitesse initiale de travail de l'outil et une vitesse initiale d'avancement de la machine,
- appliquer par des moyens prévus à cet effet à un module de régulation de la vitesse de travail de l'outil et à un module de régulation de la vitesse d'avancement de la machine, un signal de commande représentatif de la vitesse de travail et de la vitesse d'avancement déterminées respectivement par les troisièmes moyens, et prendre des mesures de régulation nécessaires, lorsqu'elles s'écartent des valeurs prédéterminées au-delà d'un premier seuil auxiliaire pour maintenir ces vitesses constantes.
- comparer la vitesse de travail effective avec la vitesse de travail résultant de la sélection, par l'opérateur de la machine, de la première valeur et engendrer, lorsque la différence entre ces deux vitesses dépasse un seuil principal prédéterminé, qui est supérieur au premier seuil auxiliaire, un premier signal de correction destiné à être envoyé aux troisièmes moyens afin que ces moyens déterminent une autre vitesse de travail de l'outil et une autre vitesse d'avancement de la machine et des signaux correspondants soient appliqués aux deux modules de régulation.

De manière analogue à ce qui a été décrit par rapport au dispositif de l'invention et de son fonctionnement, le procédé de l'invention peut comprendre une étape supplémentaire selon laquelle la vitesse de travail effective est comparée avec la vitesse de travail résultant de la sélection, par l'opérateur de la machine, de la première valeur, et, lorsque la différence entre ces deux vitesses dépasse un second seuil auxiliaire prédéterminé, qui est supérieur au seuil principal, un deuxième signal de correction est envoyé au troisième moyen afin que ces moyens déterminent une vitesse de travail de l'outil et une vitesse d'avancement de la machine en corrélation avec une valeur dans la série des premières valeurs qui est la valeur la plus proche, inférieure ou supérieure, par rapport à la valeur préalablement choisie dans cette série. Ensuite, des signaux correspondants sont appliqués au module de régulation de la vitesse de l'outil et de la vitesse d'avancement de la machine. Ces modules réagissent alors aux signaux reçus de manière à maintenir constantes, les deux nouvelles vitesses.

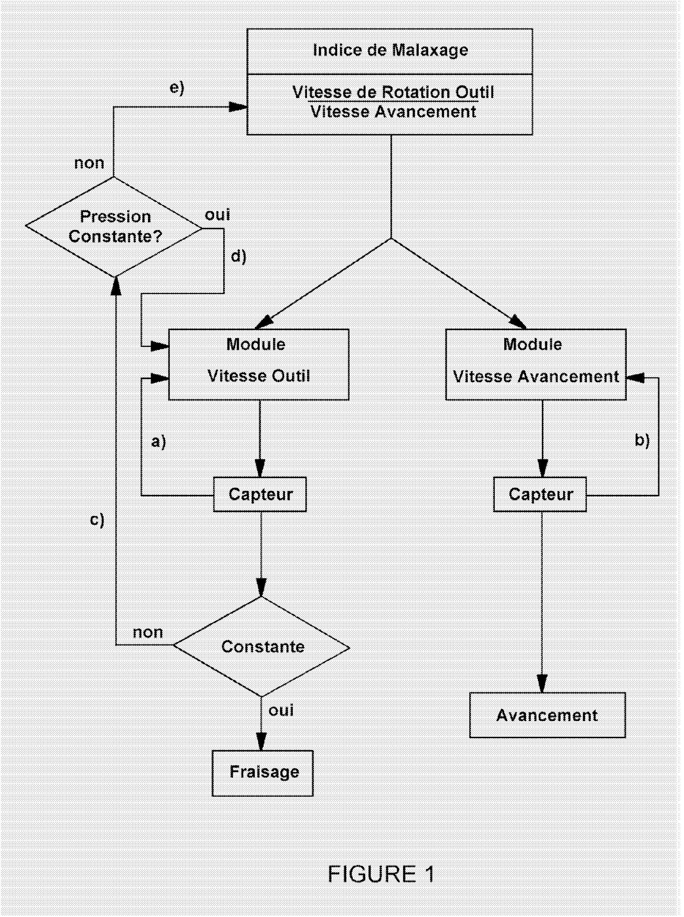

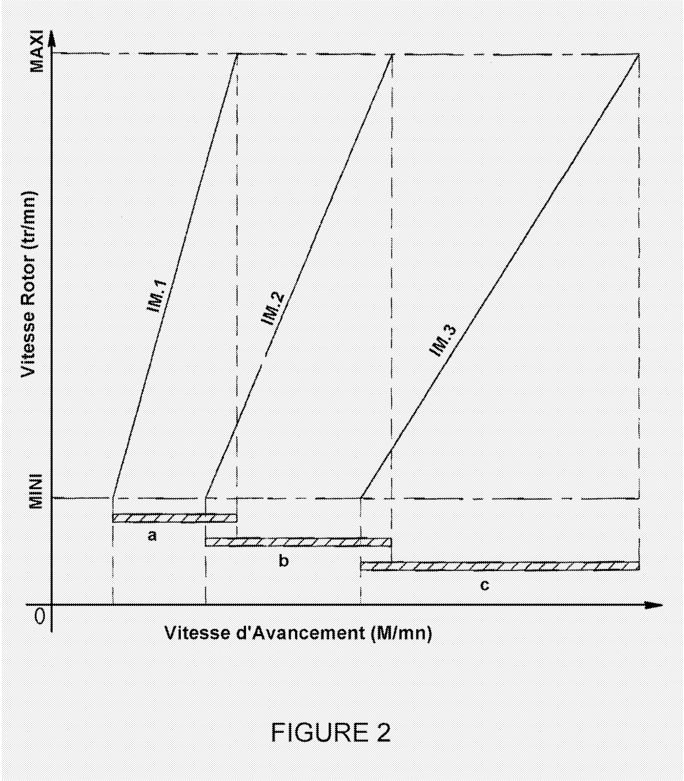

Les figures 1 et 2 jointes concernent un exemple de réalisation de l'invention.

La figure 1 représente, sous la forme d'un diagramme, le flux des signaux donnés pour commander une machine de traitement d'un sol équipé d'un dispositif selon l'invention et mettant en oeuvre le procédé de régulation décrit ci-avant.

Dans ce diagramme, la série des premières valeurs est appelée sommairement "indice de malaxage" lM et correspond au rapport entre la vitesse de travail et la vitesse d'avancement. La valeur que l'opérateur de la machine choisira dans cette série de premières valeurs est prédéterminée à la suite d'une analyse du sol à traiter et en vue de l'obtention d'une certaine granulométrie des morceaux du sol à obtenir par l'action de la machine de traitement d'un sol. Cette sélection d'un indice de malaxage a pour conséquence la sélection d'une vitesse de travail et d'une vitesse d'avancement corrélées par les troisièmes moyens d'une unité centrale du dispositif de l'invention. Sur la base de cette sélection, des moyens prévus à cet effet appliquent au module destiné à la régulation de la vitesse de travail et au module destiné à la régulation de la vitesse d'avancement de la machine, un signal de commande respectif afin que ces modules règlent la vitesse de travail et la vitesse d'avancement souhaitées et les maintiennent constantes. Les boucles de régulation a), b) correspondent aux systèmes d'autorégulation respectifs pour chacune de ces deux vitesses. La boucle de régulation c) + d) est celle qui permet de maintenir la vitesse de travail constante en augmentant ou en réduisant de manière appropriée la force d'entraînement de l'outil au-delà de ce qui se fait dans le cadre de l'autorégulation. Si ce moyen optionnel n'est pas incorporé dans un mode de réalisation particulier du dispositif de l'invention ou si cette mesure s'avère insuffisante pour assurer le maintien de la qualité souhaitée du fraisage, une régulation par la boucle c) + e) intervient afin qu'une nouvelle vitesse de travail et une nouvelle vitesse d'avancement soient sélectionnées en corrélation avec l'indice de malaxage préalablement choisi.

Si la nature du sol varie à un degré tel que même la régulation moyennant la boucle c) + e) s'avère insuffisante, un nouvel indice de malaxage est choisi à partir duquel la régulation est faite par le dispositif selon l'invention, comme décrit ci-avant.

Selon l'attribution des premières valeurs et des secondes valeurs pour une machine de travail donnée, la recherche d'un nouvel indice de malaxage peut être fait soit en choisissant la valeur la plus proche, supérieure ou inférieure, soit en choisissant, par exemple, la deuxième ou troisième valeur la plus proche supérieure ou inférieure dans la série des premières valeurs ou indices de malaxage par rapport à la valeur précédemment choisie.

La figure 2 montre trois possibilités de travail consistant à des vitesses d'avancement variables correspondant aux indices de malaxage IM1, IM2 et IM3. Chacun de ces indices correspond à un rapport différent entre la vitesse de travail ou vitesse du rotor et la vitesse d'avancement de la machine. De plus, chacun des trois indices s'applique à une plage de vitesses d'avancement différente pour une même plage de vitesses de travail. Les plages de vitesse d'avancement des indices de malaxage IM1, IM2 et IM2, IM3 se chevauchent respectivement sur une petite partie des plages de vitesses concernées.

Si l'on considère le cas d'une machine de traitement des sols dont l'outil de travail est une fraise et qui utilise des organes moteurs hydrauliques pour la fraise et l'organe d'avancement, organes moteurs actionnés par un fluide hydraulique mis en pression par un moteur principal, ledit moteur principal est de préférence mis dans des conditions de fonctionnement optimales de rendement correspondant à une puissance hydraulique donnée disponible. L'invention peut alors être mise en oeuvre en répartissant selon un rapport déterminé entre les organes moteurs de la fraise et d'avancement la pression de fluide et donc la puissance disponible. Par exemple si le fraisage se fait à pression de fluide constante mais que la vitesse de fraisage peut varier (en utilisant par exemple un moteur hydraulique à taille de cylindre variable), la puissance absorbée pour le fraisage va pouvoir varier. Si en ce qui concerne l'avancement, on utilise une pression de fluide variable pour faire varier la vitesse d'avancement, la vitesse d'avancement est directement liée à la pression de fluide, la puissance absorbée pour l'avancement va aussi varier. Dans tous les cas, on s'arrange pour que la somme des puissances absorbées pour le fraisage et pour l'avancement soit égale à la puissance disponible produite par le moteur principal. Ainsi, si la puissance absorbée pour le fraisage augmente, on fera en sorte de diminuer la puissance absorbée pour l'avancement (diminution de la vitesse d'avancement) et, inversement, si la puissance absorbée pour le fraisage diminue, on fera en sorte d'augmenter la puissance absorbée pour l'avancement (augmentation de la vitesse d'avancement). De cette manière, la machine fonctionne à un rendement optimal. On comprend cependant que des limites sont fixées à ces variations, afin de tenir compte de situations anormales comme une casse de fraise qui provoquerait suite à la baisse de puissance absorbée de fraisage, une accélération d'avancement anormale, voire dangereuse, ceci pouvant être obtenu par une limitation du nombre de secondes valeurs indicatrices vers les hautes vitesses d'avancement.

En mettant en relation le rapport vitesse de fraisage (d'outil) sur vitesse d'avancement, avec l'indice de malaxage (IM) par une relation de proportionnalité ou de préférence d'égalité, on peut obtenir un fonctionnement optimal de la machine.

On comprend bien que l'invention peut être mise en oeuvre aussi bien avec des groupes de valeurs discrètes de premières et de secondes valeurs indicatives dans des tables de valeurs disponibles, qu'avec des relations mathématiques sous forme de fonctions calculables par l'unité centrale de traitement et donnant les secondes valeurs.

## Revendications

1. Dispositif de régulation simultanée de la vitesse d'avancement d'une machine de traitement d'un sol et de la vitesse de travail d'un outil de cette machine,
**caractérisé en ce qu'**il comprend :
- une unité centrale comportant
= un premier moyen pour stocker une série de premières valeurs indicatives de différents sols à traiter,
= un second moyen pour stocker une série de secondes valeurs indicatives d'une vitesse de travail préétablie de l'outil et d'une vitesse d'avancement préétablie de la machine et
= des troisièmes moyens pour corréler chacune des premières valeurs à une des secondes valeurs,
- un module de régulation de la vitesse de travail de l'outil et un module de régulation de la vitesse d'avancement de la machine, ces modules comportant des moyens de régulation permettant de maintenir la vitesse de travail et la vitesse d'avancement respectivement à la valeur choisie le temps que la vitesse effective correspondante ne dépasse pas un seuil d'autorégulation,
- des moyens pour appliquer à chacun des deux modules de régulation un signal de commande représentatif d'une vitesse de travail et d'une vitesse d'avancement respectivement, ces signaux de commande résultant de la sélection, par un opérateur de la machine, d'une valeur dans la série des premières valeurs, les deux modules de régulation réagissant aux signaux reçus de manière à faire entraîner la machine et l'outil avec une vitesse d'avancement et une vitesse de travail correspondant à la sélection faite par l'opérateur et à maintenir constantes les deux vitesses,
- des moyens pour comparer la vitesse de travail effective avec la vitesse de travail résultant de la sélection, par l'opérateur de la machine, de la première valeur et pour engendrer, lorsque la différence entre ces deux vitesses dépasse un seuil principal prédéterminé, qui est supérieur au seuil d'autorégulation des modules de régulation des deux vitesses, un signal de correction destiné à être envoyé aux moyens de corrélation afin que ces moyens déterminent une autre vitesse d'avancement de la machine selon un rapport prédéterminé entre la vitesse de travail et la vitesse d'avancement et que des signaux correspondants soient appliqués aux deux modules de régulation.

2. Dispositif selon la revendication 1, **caractérisé en ce qu'**il comprend un premier capteur engendrant un premier signal représentatif des efforts de réaction du sol tendant à modifier la vitesse de travail de l'outil au-delà d'un premier seuil auxiliaire prédéterminé, qui est inférieur au seuil principal, le signal étant envoyé à un moyen d'entraînement de l'outil afin de rétablir la vitesse de travail résultant de la sélection préalable faite par l'opérateur.

3. Dispositif selon la revendication 1 ou 2, **caractérisé en ce qu'**il comprend un deuxième capteur engendrant un deuxième signal représentatif des efforts de réaction du sol tendant à modifier la vitesse de travail de l'outil au-delà d'un second seuil auxiliaire, qui est supérieur au seuil principal prédéterminé, le signal étant envoyé aux moyens de corrélation afin qu'une autre vitesse d'avancement de la machine soit choisie en corrélation avec une valeur dans la série des premières valeurs qui est la valeur la plus proche inférieure ou supérieure par rapport à la valeur préalablement choisie dans cette série, et afin que des signaux correspondants soient appliqués aux modules de régulation de la vitesse de travail de l'outil et de la vitesse d'avancement de la machine, les modules réagissant aux signaux reçus de manière à maintenir constantes les deux nouvelles vitesses.

4. Dispositif selon l'une quelconque des revendications précédentes, **caractérisé en ce qu'**il comprend un troisième capteur engendrant un signal représentatif de la vitesse effective de travail de l'outil et un quatrième capteur engendrant un second signal représentatif de la vitesse effective d'avancement de la machine, le troisième et le quatrième capteurs étant reliés au module de régulation de la vitesse de travail et au module de régulation de la vitesse d'avancement respectivement pour la régulation de la vitesse correspondante.

5. Dispositif selon la revendication 4, **caractérisé en ce que** le premier, le deuxième et le troisième capteur forment un seul capteur servant à la régulation de la vitesse de travail de l'outil.

6. Dispositif selon l'une quelconque des revendications précédentes, **caractérisé en ce que** l'unité centrale comprend un moyen permettant d'enregistrer des premières et des secondes valeurs.

7. Dispositif selon l'une quelconque des revendications précédentes, **caractérisé en ce qu'**une première partie et une seconde partie des valeurs constituant la série de secondes valeurs indicatives d'une vitesse de travail préétablie de l'outil et d'une vitesse d'avancement préétablie de la machine sont liées les unes aux autres par des rapports numériques prédéterminés entre une vitesse de travail et une vitesse d'avancement.

8. Procédé de régulation simultanée de la vitesse d'avancement d'une machine de traitement d'un sol et de la vitesse de travail d'un outil de cette machine,
**caractérisé par** les étapes suivantes :
- sélectionner, dans une unité centrale comportant
= un premier moyen pour stocker une série de premières valeurs indicatives de différents sols à traiter,
= un second moyen pour stocker une série de secondes valeurs indicatives d'une vitesse de travail préétablie de l'outil et d'une vitesse d'avancement préétablie de la machine et
= des troisièmes moyens pour corréler chacune des premières valeurs à une des secondes valeurs,
une valeur dans la série des premières valeurs sur la base de laquelle les troisièmes moyens déterminent une vitesse initiale de travail de l'outil et une vitesse initiale d'avancement de la machine,
- appliquer par des moyens prévus à cet effet à un module de régulation de la vitesse de travail de l'outil et à un module de régulation de la vitesse d'avancement de la machine, un signal de commande représentatif de la vitesse de travail et de la vitesse d'avancement déterminées respectivement par les troisièmes moyens, et prendre des mesures de régulation nécessaires pour maintenir ces vitesses constantes, lorsque la différence entre elles et les valeurs prédéterminées dépassent un premier seuil auxiliaire,
- comparer la vitesse de travail effective avec la vitesse de travail résultant de la sélection, par l'opérateur de la machine, de la première valeur et engendrer, lorsque la différence entre ces deux vitesses dépasse un seuil principal prédéterminé, qui est supérieur au premier seuil auxiliaire, un premier signal de correction destiné à être envoyé aux troisièmes moyens afin que ces moyens déterminent une autre vitesse de travail de l'outil et une autre vitesse d'avancement de la machine et des signaux correspondants soient appliqués aux deux modules de régulation.

9. Procédé selon la revendication 8, **caractérisé par** l'étape supplémentaire de comparer la vitesse de travail effective avec la vitesse de travail résultant de la sélection, par l'opérateur de la machine, de la première valeur et engendrer, lorsque la différence entre ces deux vitesses dépasse un second seuil prédéterminé, qui est supérieur au seuil principal, un deuxième signal de correction destiné à être envoyé aux troisièmes moyens afin que ces moyens déterminent une vitesse d'avancement de la machine en corrélation avec une valeur dans la série des premières valeurs qui est la valeur la plus proche inférieure ou supérieure par rapport à la valeur préalablement choisie dans cette série, et afin que des signaux correspondants soient appliqués aux modules de régulation de la vitesse de travail de l'outil et de la vitesse d'avancement de la machine, les modules réagissant aux signaux reçus de manière à maintenir constantes les deux nouvelles vitesses.
